(19) Europäisches Patentamt
European Patent Office
Office européen des brevets

(11) **EP 0 870 132 B1**

(12) **EUROPÄISCHE PATENTSCHRIFT**

(45) Veröffentlichungstag und Bekanntmachung des Hinweises auf die Patenterteilung:
**26.04.2000  Patentblatt 2000/17**

(21) Anmeldenummer: **96918606.3**

(22) Anmeldetag: **24.06.1996**

(51) Int Cl.⁷: **F16H 61/02**, B60K 41/00, B60G 17/015

(86) Internationale Anmeldenummer:
**PCT/DE96/01113**

(87) Internationale Veröffentlichungsnummer:
**WO 97/05408 (13.02.1997 Gazette 1997/08)**

(54) **SCHALTUNGSANORDNUNG ZUM STEUERN EINES FAHRWERKS- ODER ANTRIEBSSYSTEMS IN EINEM KRAFTFAHRZEUG**

CIRCUITRY FOR CONTROLLING A RUNNING OR DRIVING SYSTEM OF A MOTOR VEHICLE

CIRCUITS DE COMMANDE DU SYSTEME DE ROULEMENT OU D'ENTRAINEMENT D'UN VEHICULE A MOTEUR

(84) Benannte Vertragsstaaten:
**DE FR GB**

(30) Priorität: **26.07.1995  DE 19527323**

(43) Veröffentlichungstag der Anmeldung:
**14.10.1998  Patentblatt 1998/42**

(73) Patentinhaber: **SIEMENS AKTIENGESELLSCHAFT**
**80333 München (DE)**

(72) Erfinder:
• **GRAF, Friedrich**
  **D-93049 Regensburg (DE)**
• **HAUPTMANN, Werner**
  **D-81673 München (DE)**

(56) Entgegenhaltungen:
EP-A- 0 635 659        EP-A- 0 645 559
WO-A-96/07559          DE-A- 4 337 164
US-A- 5 089 963

## Beschreibung

Die Erfindung betrifft eine Schaltungsanordnung nach dem Oberbegriff von Anspruch 1. In der Kraftfahrzeugtechnik nehmen neuerdings adaptive Systemkomponenten in den Bereichen Fahrwerks- und Sicherheitstechnik sowie Antriebsmanagement an Bedeutung zu. Die Einstellung bestimmter Einrichtungen oder Systeme im Fahrzeug - wie z. B. Automatikgetriebe, aktive Dämpfung und Niveauregulierung, oder Lenkkraftverstärkung - soll dabei an die jeweilige Fahrsituation angepaßt werden. Die Erfindung geht aus von einer bekannten automatischen Getriebesteuerung mit einem Fuzzy-Controller, der aufgrund der Fahrsituation einen Schaltbefehl abgibt und der in einer Lemphase optimiert wird (DE-A 43 37 164). Fuzzy-Regeln, die in Neuronen abgespeichert sind, werden in einem Lernverfahren mittels eines neuronalen Netzes in einer Korrelationsanalyse des Zusammenhangs zwischen den abgespeicherten Daten über die Fahrsituation und der Klassifizierung neu definiert, und dadurch werden die Synapsen zwischen den Neuronen optimiert.

Ein bekanntes Steuersystem zum Schalten eines automatischen Getriebes unter Verwendung von Fuzzy-Logik-Methoden berücksichtigt bei der Auslegung von Schaltstrategien die Fahrleistung, den Verbrauch und den Aufwand und reagiert auch auf die Fahrweise und den Fahrzustand (WO 93/23 689). Es benötigt dazu eine größere Anzahl unterschiedlicher Regelsätze von Fuzzy-Produktionsregeln, die das Wissen eines menschlichen Experten wiedergeben und die somit alle von dem Entwickler des Steuersystems vorgegeben werden müssen. Dazu ist ein erheblicher Arbeitsaufwand erforderlich. Außerdem ist das menschliche Expertenwissen auch hier mit Unsicherheiten behaftet.

Eine bekannte Schaltsteuerung für ein automatisches Getriebe (US 5 089 963) enthält ein matrixartiges neuronales Netzwerk. Um das Rechenverfahren zu beschleunigen wird die Matrix diagonalisiert oder in Eingenwerte zerlegt, so daß die unwichtigen Matrixelemente oder Neuronen gelöscht werden können.

Der Erfindung liegt die Aufgabe zugrunde, ein System zur Erkennung der jeweils aktuellen Fahrsituation eines Kraftfahrzeugs zu schaffen, das in der Lage ist, maschinell zu lernen und damit auch nichtlineare Steuervorschriften selbsttätig zu erarbeiten und zu verbessern.

Diese Aufgabe wird erfindungsgemäß durch eine Schaltungsanordnung nach Anspruch 1 gelöst. Zweckmäßige Weiterbildungen der Erfindung sind in den Unteransprüchen niedergelegt.

Ein Vorteil der Erfindung ist, daß sie ein System zur Erkennung der aktuellen Fahrsituation in einem Kraftfahrzeug zur Verfügung stellt. Das Klassifikationssystem liefert anhand verschiedener, im Kraftfahrzeug laufend gemessener Sensordaten, Aussagen über den aktuellen Fahrzustand in Bezug auf Fahrdynamik, Fahrmanöver und Fahrerverhalten. Diese Informationen ermöglichen eine intelligente, zeitlich adaptive, fahrsituationsabhängige Steuerung verschiedener Systeme im Kraftfahrzeug. Der zunehmende Einsatz solcher adaptiven Komponenten in den Bereichen Fahrwerks- und Antriebssysteme zeichnet sich schon derzeit ab und wird eine noch größere Bedeutung in zukünftigen Fahrzeuggenerationen erhalten, da sich damit eine Erhöhung von Fahrsicherheit, -ökonomie und -komfort erzielen läßt.

Weitere Beispiele für adaptive Fahrzeugsysteme, für die eine fahrsituationsabhängige Steuerung vorteilhafterweise angewendet werden kann, sind Allradlenkungen, Hybridantriebe, sog. intelligente Geschwindigkeitsregelanlagen und Antriebsschlupfregelungen.

Ausführungsbeispiele der Erfindung werden im folgenden anhand der Zeichnung erläutert. Es zeigen:

Figur 1:  eine Schaltungsanordnung gemäß der Erfindung im Überblick,
Figur 2:  eine zur Erläuterung einer in der Schaltungsanordnung nach Figur 1 durchgeführten Fusion von Sensorsignalen dienende räumliche Darstellung eines Kraftfahrzeugs,
Figur 3:  eine Darstellung von bei der Verarbeitung von Sensorsignalen verwendeter Zeitfenster,
Figur 4:  Eingangszugehörigkeitsfunktionen eines Fuzzy-Systems in Figur 1,
Figur 5:  Ausgangszugehörigkeitsfunktionen des Fuzzy-Systems in Figur 1,
Figur 6:  eine in der Schaltungsanordnung nach Figur 1 verwendete Fuzzy-Regelbasis,
Figur 7:  eine grafische Darstellung einer in Figur 1 durchgeführten Fuzzifizierung,
Figur 8:  ein Regelneuron eines neuronalen Netzes in Figur 1, und
Figur 9:  eine Darstellung einer Fuzzy-Neuro-Topologie der Schaltungsanordnung von Figur 1.

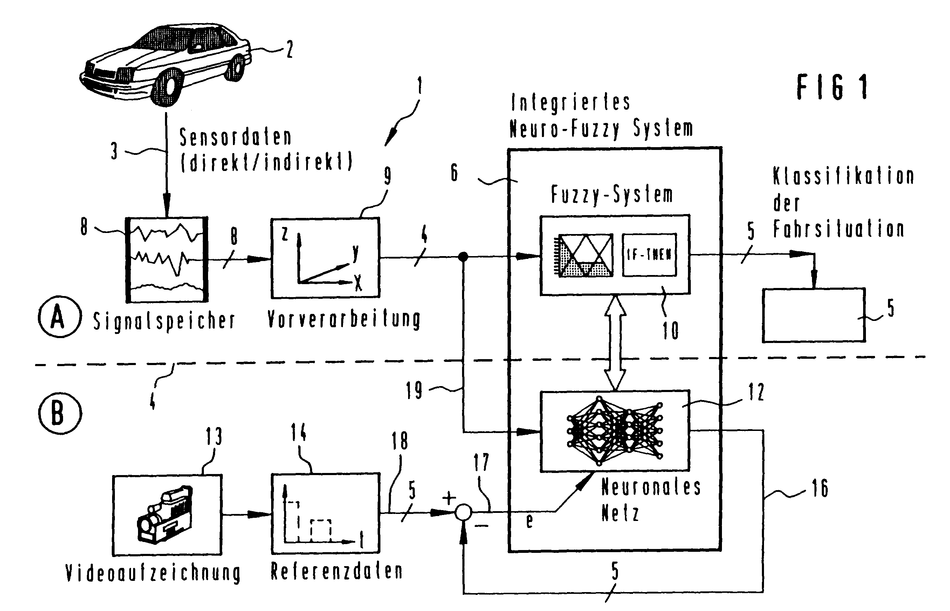

Eine Schaltungsanordnung 1 (im folgenden auch als Steuerung bezeichnet) dient zum Steuern einer der genannten Einrichtungen oder Aggregate in einem Kraftfahrzeug 2 (Figur 1). Sie empfängt über in der Zeichnung nur angedeutete Signalleitungen 3 Sensordaten, die in dem Kraftfahrzeug 2 erfaßt werden. Die Sensordaten können direkt von verschiedenen Sensoren oder indirekt - z.B. nach einer Verarbeitung in einem ABS-Gerät - übermittelt werden. Die Schaltungsanordnung 1 kann gedanklich in zwei Teilsysteme A und B gegliedert werden, wie in Figur 1 durch eine gestrichelte Trennlinie 4 angedeutet ist. Diese Teilsysteme oder Verarbeitungsblöcke A und B arbeiten im wesentlichen unabhängig voneinander und werden durch einen Kembaustein 6 - auch als "Integriertes Neuro-Fuzzy-System" bezeichnet - miteinander gekoppelt. Die Ausgangssignale des Verarbeitungsblockes A gelangen als Stell- oder Steuersignale zu einer zu steuernden Einrichtung 5 (zum Beispiel zu einem automatischen Getriebe). Der Block A weist folgende Komponenten auf: einen Signalspeicher 8, einen Vorverarbeitungsbaustein oder -schaltung 9 und ein Fuzzy-System 10.

Die Wirkungsweise der Schaltungsanordnung 1 basiert auf der Verbindung des Konzepts einer Klassifikation mit einem Fuzzy-System mit dem Konzept eines neuronalen Netzes in einem Neuro-Fuzzy-Gesamtsystem. Ein solches Neuro-Fuzzy-Erkennungs- oder Klassifikationsverfahren gestattet beim Entwurf und der Entwicklung von Steuerung die gemeinsame Nutzung der Eigenschaften von Fuzzy-Systemen und von neuronalen Netzen in einem integrierten System. Zum einen kann damit vorhandenes Expertenwissen mit Hilfe linguistisch formulierter WENN-DANN-Regeln (in einer Fuzzy-Regelbasis) und gewichtender Zugehörigkeitsfunktionen verarbeitet werden. Zum anderen kann die Fähigkeit eines neuronalen Netzes genutzt werden, nichtlineare Zusammenhänge anhand der verfügbaren, aufgenommenen Sensordaten zu erlernen. Die Kombination von Expertenwissen und Prozeßdaten gestattet es, ein vollständiges Bild der Zusammenhänge zu erstellen.

Als Eingangsgrößen für die Schaltungsanordnung 1 werden bis zu zwölf verschiedene Sensorinformationen benutzt, die fortlaufend im Fahrzeug gemessen und im Signalspeicher 8 abgelegt werden. Die Sensoren selbst sind nicht dargestellt, da sie allgemein bekannt sind. Wichtige Sensorsignale sind z.B. die momentane Geschwindigkeit, die Stellung der Drosselklappe, der eingelegte Gang, die Querbeschleunigung und die Motordrehzahl des Kraftfahrzeugs 2. Diese sog. primären Sensorsignale werden nach einer Vorverarbeitung und einer teilweisen Fusion in der Schaltung 9 dem Fuzzy-System 10 zugeführt, das anhand der momentanen Eingangsdaten die aktuelle Situation einschätzt oder klassifiziert, d.h. z.B. in eine der folgenden Kategorien einordnet: "Stop", "Stadtverkehr", "Landstraße (gerade, kurvig, bergig, ...)", "Autobahn" usw.

Der vollständige Funktionsablauf wird nun anhand des Datenflusses erläutert. Im Kraftfahrzeug 2 werden verschiedene Sensor- und Steuersignale, wie z.B. über die momentane Geschwindigkeit, die Stellung der Drosselklappe, den eingelegten Gang, die Querbeschleunigung oder die Motordrehzahl, während der Fahrt kontinuierlich aufgezeichnet und in dem Signalspeicher 8 abgelegt. Diese Sensorsignale werden anschließend dem Vorverarbeitungsbaustein 9 zugeführt. Hier erfolgt neben einer Vorfilterung und Glättung der Sensorsignale eine Verarbeitung unter Berücksichtigung der zeitlichen Historie der Signale. Außerdem wird eine zeitliche Datenkompression und, durch eine Zusammenfassung oder Fusion verschiedener Sensorsignale, eine Dimensionsreduktion durchgeführt. Durch geeignete Fusion verschiedener Sensorinformationen werden hier z.B. acht Sensorsignale zu vier verschiedenen Fusionssignalen verknüpft. Durch diese Vorverarbeitung erreicht man damit einerseits eine Herabsetzung der Abtastrate und andererseits eine Reduzierung der Dimensionalität des Klassifikationsproblems.

Die vorverarbeiteten Sensorsignale werden anschließend dem Fuzzy-System 10 - im folgenden auch als Fuzzy-Klassifikationssystem bezeichnet - zugeführt, das anhand der momentanen Eingangsdaten die aktuelle Fahrsituation einschätzt, d.h. klassifiziert. In dem beschriebenen Ausführungsbeispiel erfolgt eine Klassifizierung in fünf verschiedene Fahrsituationsklassen. Da der Block (A) für sich das eigentliche Erkennungssystem bildet, welches im Kraftfahrzeug 2 im Online-Betrieb zum Klassifizieren der Fahrsituation eingesetzt wird, entspricht der beschriebene Datenfluß deshalb auch exakt dem Ablauf der Verarbeitung im Fahrzeug während der Fahrt.

Das Teilsystem B dient zur Generierung und Optimierung des Fuzzy-Klassifikationssystems im Offline-Betrieb durch Einsatz eines neuronalen Netzes 12. Dieses Teilsystem kommt nur während der Entwurfs- und Entwicklungsphase der erfindungsgemäßen Schaltungsanordnung zum Einsatz und ist danach nicht Bestandteil des Online-Erkennungssystems im Fahrzeug 2. Das Teilsystem B besteht aus einer Datenbank 13 mit Videoaufzeichnungen von Meßfahrten, einem Referenzdatenspeicher 14 und dem neuronalen Netz 12, das vorliegend als Simulationsrechner realisiert ist.. Die Kopplung beider Teilsysteme A und B erfolgt durch das integrierte Neuro-Fuzzy-System 6.

Die Signale am Ausgang des neuronalen Netzes werden über eine Datenleitung 16 mit negativem Vorzeichen auf ein Addierglied 17 rückgekoppelt und in diesem von den auf einer Datenleitung 18 eintreffenden Ausgangssignalen des Referenzdatenspeichers 14 subtrahiert. Die Differenz wird einem Eingang des neuronalen Netzes 12 zugeführt. Entsprechend der hier gewählten fünf Fahrsituationsklassen sind die Datenleitungen 16 und 18 als Fünffachleitungen ausgebildet. Die von dem Vorverarbeitungsbaustein 9 gelieferten Sensordaten gelangen über ein (Vierfach-)Datenleitung 19 auf einen zweiten Eingang des neuronalen Netzes 12.

Die Arbeitsweise und das Zusammenspiel der beiden Verarbeitungsblöcke A und B läßt sich anhand der Entwicklungsphase wie folgt beschreiben. Die Basis für die Schaltungsanordnung 1 wird von einem Fuzzy-Klassifikationssystem gebildet, das in einem ersten Schritt der Entwicklungsphase mit Hilfe von vorhandenen Informationen und existierendem Expertenwissen aufgestellt wird. Das Fuzzy-System 10 wird im ersten Schritt mit einer die für die Klassifikationsaufgabe erforderlichen Struktur versehen, wie z.B. Anzahl der Eingangs- und Ausgangsvariablen, Anzahl der Zugehörigkeitsfunktionen und einer initialen Regelbasis. Das Fuzzy-System führt später die eigentliche Fahrsituationsklassifikation im Online-Betrieb im Fahrzeug 2 durch. Im einem zweiten Schritt wird das initiale Fuzzy-System in dem Integriertes Neuro-Fuzzy-System 6 vollständig und ohne jeglichen Verlust von Information in die Struktur eines neuronalen Netzes konvertiert. Dadurch steht im Verarbeitungsblock B ein neuronales Netz 12 zur Verfügung, welches dasselbe Klassifikationssystem repräsentiert, wie das Fuzzy-System und das identische Eingangs- und Ausgangsverhalten aufweist. Diese Fuzzy-Neuro-Transformation realisiert die Übersetzung von der Repräsentation des Erkennungssystems innerhalb der Fuzzy-Domäne in die Neuro-Domäne. Dabei handelt es sich um eine korrespondenzerhaltende bidirektionale Transformation, d.h. die Topologie des neuronalen Netzes kann zu jedem Zeitpunkt wieder in die Repräsentation als Fuzzy-System überführt werden.

Im Teilsystem B wird nun anschließend mit Hilfe des neuronalen 12 Netzes ein in dem Fuzzy-System 10 enthaltener Fahrsituationsklassifikator trainiert und damit eine datengetriebene Optimierung des Erkennungssystems durchgeführt. Dabei werden unterschiedliche Komponenten des Fuzzy-Klassifikators verändert, verworfen oder neu generiert. Das Training des neuronalen Netzes 12 wird im Offline-Modus mit Trainingsdaten durchgeführt, die aus einem geeigneten Satz von Eingangsdaten und Ausgangsdaten des Klassifikators bestehen. Als Eingangsdaten dienen die aufgezeichneten vorverarbeiteten Sensordaten aus dem Fahrzeug 2, aus denen der Klassifikator die aktuelle Fahrsituation bestimmt. Das Klassifikationsergebnis am Netzausgang (Klassifikatorausgangsvektor) wird im Lemvorgang verglichen mit dem idealen Referenzausgangsvektor. Mit Hilfe eines Fehlers e, der sich aus der Differenz von Klassifikatorausgangsvektor und Referenzausgangsvektors ergibt, wird das neuronale Netz nach dem bekannten Backpropagation-Algorithmus trainiert (siehe zum Beispiel S. Y. KUNG, *Digital Neural Networks,* Prentice Hall, Englewood Cliffs, New Jersey, 1993, Seiten 24-40, insbesondere S. 39 und R. Rojas, *Theorie der neuronalen Netze,* Springer-Verlag Berlin Heidelberg, 1993, S. 149-172).

Ein hierbei durchgeführtes überwachtes ("supervised") Training des Klassifikators erfordert die Bereitstellung eines Referenzdatensatzes, der in Korrespondenz zu den während einer Fahrt mit dem Kraftfahrzeug 2 aufgenommen Sensorsignalen zu jedem Zeitpunkt die tatsächliche aktuelle Fahrsituationsklasse angibt. Dazu wird bei verschiedenen Meßfahrten parallel zur Messung und Speicherung der Sensordaten zusätzlich der Fahrtverlauf mit einer Videokamera, die frontal an dem Kraftfahrzeug angebracht ist, aufgezeichnet. Die Videoaufzeichnung wird zum Beispiel von einem Systementwickler ausgewertet und - abhängig von der gewünschten Anzahl der Klassen - wird dann der zeitliche Verlauf der Fahrsituationsklassen aufgestellt und als Referenzdatensatz (auch als Zieldatensatz oder Target bezeichnet) abgelegt. Die Referenzdaten können aber auch auf beliebige andere Art zur Verfügung gestellt werden. Beim Training kann so dem neuronalen Netz 12 für jeden Lemschritt eine Sensordatenkombination als Eingangsvektor (aus 4 Eingangswerten bestehend) und die dazugehörige Angabe der Fahrsituationsklasse als Ausgangsvektor (5 Klassen) eingegeben werden. Das Training wird solange ausgeführt, bis eine vorgegebene Fehlerschwelle e zwischen Netzausgang und Referenz unterschritten ist.

Nach Abschluß des Trainings und damit der Optimierung des Klassifikators wird das resultierende neuronale Netz wieder vollständig in die Fuzzy-Repräsentation des Teilsystems A zurückübersetzt. Das Teilsystem B, in dem das datengetriebenen Training durchgeführt wurde, wird dann abgetrennt und ist nicht mehr Bestandteil des im Fahrzeug implementierten Fahrsituationserkenners. Die sich durch das Training ergebenden Änderungen der Komponenten des (Fuzzy-Klassifikators ?) Fuzzy-Systems 10 - es sind dies die Form und Lage der Zugehörigkeitsfunktionen von Ein- und Ausgangssignalen und die Fuzzy-Regelbasis - können anschließend visualisiert und beurteilt werden. Nach anschließender Evaluierung in einem entsprechenden Simulationswerkzeug (wie zum Beispiel das auf dem Markt unter der Bezeichnung SieFuzzy erhältliche Siemens CAE-Entwicklungssystem) ist damit die Entwicklung der Steuerschaltung 1, welche sowohl auf Expertenwissen als auch auf gemessene Sensordaten zurückgreift, abgeschlossen und das Fuzzy-System 10 - hier auch als Fuzzy-Fahrsituationsklassifikationssystem mit Vorverarbeitung bezeichnet - kann im Fahrzeug 2 zum Steuern der vorgesehen Einrichtung 5 eingesetzt werden.

Der Entwicklungsablaufs im Neuro-Fuzzy-System 6 wird in folgenden zusammenfassen erläutert. Die einzelnen Entwicklungsschritte werden in den Verarbeitungsblöcken durchgeführt, die sich aus folgender Tabelle 1 ergeben.

Tabelle 1

| Entwicklungsschritt: | | | Verarbeitungsblock: |
|---|---|---|---|
| | 1. | Entwurf des initialen Fuzzy-Systems (Expertenwissen) | A |
| | 2. | Übersetzung des Fuzzy-Systems in ein neuronales Netz (Fuzzy-Neuro-Transformation) | A-B |
| | 3. | Training des neuronalen Netzes (Sensordaten u. Videoinformation) | B |
| | 4. | Rückübersetzung des neuronalen Netzes in ein Fuzzy-System (Neuro-Fuzzy-Transformation) | B-A |
| | 5. | Endgültige Fahrsituationsklassifikation im Fahrzeug | A |

Die im Fahrzeug aufgenommenen Sensordaten werden zuerst dem Vorverarbeitungsbaustein oder -stufe 9 zugeführt, in dem aus den verschiedenen Meßparametem die eigentlichen Eingangssignale für das Fuzzy-Klassifikationssystem abgeleitet oder berechnet werden. In diesem Verarbeitungsschritt erfolgt zum einen eine Filterung und die Erfassung der zeitlichen Vorgeschichte der Sensorsignale und zum anderen eine Fusion der verschiedenen Meßparameter. Im Fahrzeug 2 werden folgende Sensorsignale während der Fahrt aufgezeichnet:

| nab | Abtriebsdrehzahl (proportional zur Fahrgeschwindigkeit) |
|---|---|
| bl | Bremslicht, Betätigung der Bremse |
| nmot | Motordrehzahl |
| a_quer | Querbeschleunigung |
| m_diff | Momentenbilanz am Getriebeabtrieb, Betrag des Differenzmomentes (daraus kann eine Schlußfolgerung über Steigungen und Gefälle gezogen werden) |
| gang_ist | aktiver Gang |
| fahrer | Fuzzy-Klassifikation des Fahrstils |

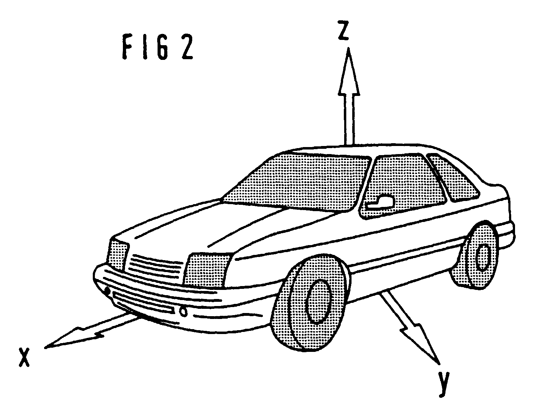

Um die Anzahl der notwendigen Eingangsvariablen für das Fuzzy-Klassifikationssystem zu reduzieren, bei gleichzeitiger Einbeziehung aller zur Verfügung stehenden Meßparameter, werden die genannten Sensordaten geeignet miteinander verknüpft und daraus vier neue Signale abgeleitet. Ziel dieser Sensorsignalfusion ist die Beschreibung des augenblicklichen dynamischen Fahrzustandes anhand der drei Raumachsen $x$, $y$, $z$ (Figur 2), sowie anhand einer rein geschwindigkeitsabhängigen Komponente $w$. Die Zusammenfassung der Rohsignale und damit die Reduktion der Eingangsdimensionalität des Problems erleichtert die Modellbildung und ermöglicht die Formulierung einer nachvollziehbaren, übersichtlichen Regelbasis für den Fuzzy-Klassifikator. Die vier Fuzzy-Eingangsvariablen werden aus den acht Sensorsignalen über die folgenden Beziehungen berechnet:

$x(t) = f_x \{gang\_ist\ (t, t-1, t-2, t-3), nmot\ (t, t-1, t-2, t-3), bl(t)\}$
$y(t) = f_y \{a\_quer\ (t, t-1, t-2, t-3), nab\ (t, t-1, t-2, t-3), fahrer(t)\}$
$z(t) = f_z \{m\_diff(t, t-1, t-2, t-3), nab\ (t, t-1, t-2, t-3), fahrer(t)\}$
$w(t) = f_w \{nab\ (t, t-1, t-2, t-3)\}$

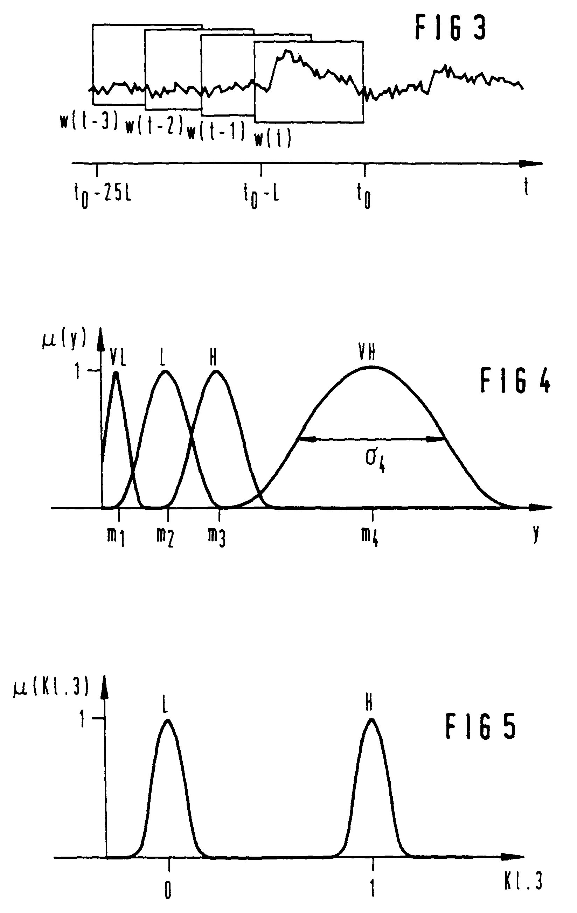

Die Fuzzy-Eingangsvariable $x$ wird so z.B. aus den Sensordaten gang_ist, nmot und bl abgeleitet. Die Bezeichnung gang_ist (t, t-1, t-2, t-3) bedeutet dabei, daß in diese Berechnung das aktuelle Zeitfenster $t$ und zusätzlich die drei letzten zurückliegenden Zeitfenster t-1, t-2, t-3 einfließen. Die Verarbeitung der unterschiedlichen Zeithistorien ist zur Verdeutlichung in Figur 3 dargestellt. Um eine Datenkompression durchzuführen, wird ein Zeitfenster $w(t)$ mit der Länge $L$ über das Rohsignal geführt und es wird jeweils der Mittelwert des im Fenster liegenden Signalabschnitts berechnet. Für das Sensorsignal gang_ist würde dieser Mittelwert mit gang_ist(t) beschrieben werden.

Um neben den aktuellen Sensordaten zusätzlich auch die zeitliche Historie, also den zurückliegenden Signalverlauf, zu berücksichtigen, werden außerdem die Mittelwerte von drei sich überlappenden, zurückliegenden Zeitfenstern w(t-1), w(t-2), w(t-3), jedoch mit unterschiedlichen Gewichtungen, mit einbezogen. Der aktuelle Wert für $x(t)$ ergibt sich also aus vier Zeitfenstern des Sensorsignals gang_ist, aus vier Zeitfenstern des Sensorsignals nmot und aus dem aktuellen Zeitfenster des Sensorsignals bl. Danach werden die Zeitfenster um eine Fensterlänge $L$ weiter gesetzt.

Durch die Mittelwertbildung und das Springen der Fenster wird eine erhebliche Datenkompression erreicht. In einem Ausführungsbeispiel wird eine Fensterlänge von $L$ = 250 Abtastwerten und eine Überlappung von 50 % verwendet. Bei einer Aufnahme der Meßdaten mit einer Abtastzeit von $T_{ab}$ = 40 ms ergibt sich damit ein neuer Wert für $x(t)$ alle 10 s. Durch die Fensterlänge kann die Reaktionszeit des Systems und der zeitliche Abstand zwischen zwei aufeinanderfolgenden Ausgaben des Fahrsituationsklassifikators festgelegt werden.

Die Struktur des Fuzzy-Systems 10, das die Fahrsituationsklassifizierung durchführt, ist für ein Ausführungsbeispiel in den Figuren 4, 5 und 6 wiedergegeben. Auf den Eingang des Fuzzy-Systems werden in diesem Fall vier Eingangsparameter gelegt, die aus acht verschiedenen, vorverarbeiteten Sensorsignalen abgeleitet werden. Figur 4 zeigt eine mögliche Verteilung der Eingangszugehörigkeitsfunktionen. Der Wertebereich jeder Eingangsvariablen ist in die vier Zugehörigkeitsfunktionen VL (Very Low), L (Low), H (High), VH (Very High) aufgeteilt und die hereinkommenden scharfen Eingangssignale werden entsprechend fuzzyfiziert und mit linguistischen Bezeichnungen versehen. Um die spätere Transformation des Fuzzy-Systems in korrespondierende Elemente einer neuronalen Netztopologie zu ermöglichen, werden für die Zugehörigkeitsfunktionen Gaußfunktionen verwendet. Die veränderlichen Parameter Mittelpunkt $m_i$ und Breite $s_i$ der Gaußglocken werden im neuronalen Netz durch entsprechende Gewichte repräsentiert.

Das Klassifikationssystem hat die Aufgabe, aus den jeweils anliegenden Eingangsparametern eine Aussage über die aktuelle Fahrsituation zu treffen. Als Ausgangsgröße soll in diesem Fall die Zuordnung zu einer von fünf verschiedenen Fahrsituationsklassen erfolgen, welche wie nachfolgend beschrieben werden können:

Klasse 1:    Sehr hohe Geschwindigkeit, kontinuierliche Fahrsituation, gerade Strecke, keine zu hohen Querbeschleunigungen, keine starken Steigungen oder Gefälle (typisch für eine Bundesautobahn BAB)

Klasse 2:     Hohe Geschwindigkeit, kontinuierliche Fahrsituation, gerade Strecke, keine zu hohen Querbeschleunigungen, keine starken Steigungen oder Gefälle (typ. Bundesstraße, Schnellstraße)

Klasse 3:     Hohe/mittlere Geschwindigkeit, kontinuierliche oder unkontinuierliche Fahrsituation, mögliche große Querbeschleunigungen und/oder starke Steigungen oder Gefälle (Landstraße, kurvig, hügelig, Übergänge zwischen Klasse 1 und 2, etc.)

Klasse 4:     Niedrige Geschwindigkeit, oft unkontinuierliche Fahrsituation, hohe Verkehrsdichte, mittlere/keine Querbeschleunigungen, mittlere/kaum Steigungen oder Gefälle (Innenstadt, Stop- und Go-Verkehr, äußerer Stadtbereich)

Klasse 5:     Sehr niedrige Geschwindigkeit oder Halt (Ampel, Kreuzung, Parken, etc.)

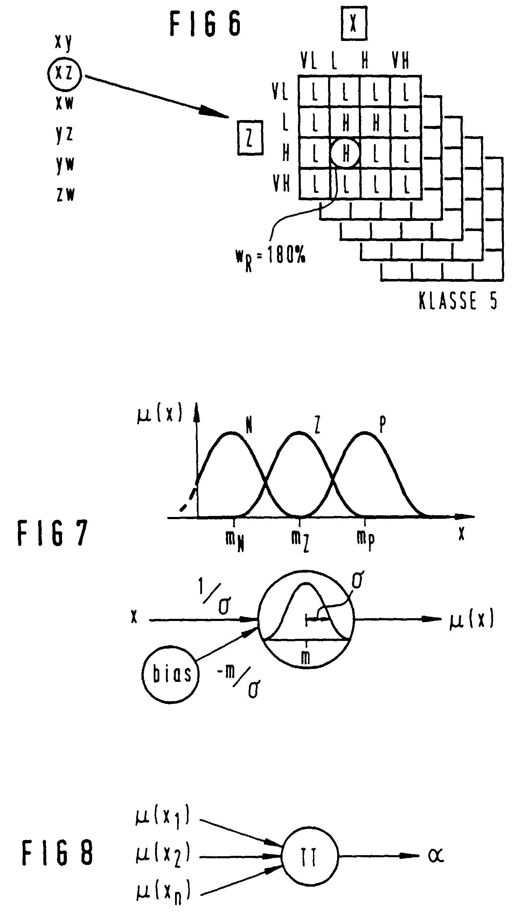

Die Struktur des Fuzzy-Systems ist derart ausgelegt, daß es für jeden der fünf verschiedenen Fahrsituationsklassen genau ein Ausgangssignal gibt (Figur 5). Jeder Ausgang ist mit nur zwei gaußförmigen Ausgangszugehörigkeitsfunktionen ausgestattet, eine davon mit Zentrum bei dem Ausgangswert 0 (Zugehörigkeitsfunktion Low), die andere bei dem Ausgangswert 1 (Zugehörigkeitsfunktion High). Für jeden Zeitschritt ergibt sich damit aus der aktuellen Kombination der vier Eingangsvariablen als Ergebnis der Defuzzifizierung ein fünfwertiger Ausgangsvektor [Kl_1 - Kl_2- Kl_3- Kl_4- Kl_5], der die momentanen Bewertungen als Wert zwischen 0 und 1 für die fünf verschiedenen Fahrsituationsklassen wiedergibt. Wird als Klassifikationsergebnis z.B. ein Ausgangsvektor [0 - 1 - 0 - 0 - 0] ausgegeben werden, so bedeutet dies, daß in diesem Fall die Fahrsituation zu 100% in Klasse 2, und mit 0% in alle anderen Klassen eingestuft wurde. Bei einer Ausgabe [0.0 - 0.0 - 0.1 - 0.2 - 0.7] dagegen wurde die aktuelle Situation in alle Klassen mit unterschiedlicher Wertigkeit eingestuft, am stärksten jedoch in die Klassen 4 (mit 20%) und 5 ( mit 70%).

Die Eingangs- und Ausgangsvariablen werden miteinander über die Fuzzy-Regelbasis des Fuzzy-Systems 10 verknüpft. Dabei wird das vorhandene Expertenwissen linguistisch formuliert. In einem Ausführungsbeispiel wird die Regelbasis mit einer Systematik angelegt, die aus Figur 6 ersichtlich ist. Mit den vier Eingangsvariablen des Fuzzy-Systems - hier bezeichnet mit $x, y, z, w$ - werden alle sechs möglichen paarweisen Permutationen gebildet, d.h. $xy, xz, xw, yz, yw, zw.$ Für jedes dieser Eingangspaare wird eine Regelmatrix aufgespannt. Im Bild ist beispielhaft eine solche Regelmatrix für die Eingangskombination xz wiedergegeben. Da beide Eingangsvariablen $x$ und $z$ jeweils mit den vier Zugehörigkeitsfunktionen VL, L, H, VH fuzzifiziert werden, ergibt sich hier für die vollständige Regelbasis eine 4 x 4 - Matrix. Als die sechzehn Matrixelemente werden die zur jeweiligen linguistischen Kombination der fuzzifizierten Eingangsvariablen gehörende Ausgangszugehörigkeitsfunktion der entsprechenden Fuzzy-Regel eingetragen. Das im Bild in der obersten Matrix gekennzeichnete Element steht also z.B. für die Regel:

$R_{xz,23}$ : WENN x ist Low UND z ist High DANN Kl_1 ist High

Der Matrixeintrag, hier H für High, bezeichnet somit die Fuzzy-Konklusion für den Ausgang Kl_1 (Klasse 1), die sich entsprechend der Regel aus der Und-Verknüpfung der Teilprämissen $x$=Low und $z$=High ergibt. Die übrigen Elemente dieser Matrix ergeben sich analog aus der Regelbasis für alle Und-Verknüpfungen von $x$ und $z$. Wie angedeutet hat die Regelbasis in dieser Darstellung eine Tiefe von fünf für die fünf verschiedenen Ausgangsvariablen Kl_1, Kl_2, Kl_3, Kl_4 und Kl_5. Jede Matrixebene beschreibt also die Konklusionen der verschiedenen Regeln bezüglich einem einzigen Ausgang, die oberste Matrix für den Ausgang Kl_1 und die unterste Matrix für den Ausgang Kl_5. Die vollständige Fuzzy-Regel lautet für den oben beschriebenen Fall damit z.B.:

$R_{xz,23}$ :    WENN x ist Low UND z ist High DANN Kl_1 ist High und Kl_2 ist Low und Kl_3 ist Low und Kl_4 ist Low und Kl_5 ist Low.

Jede Regel trifft also immer für alle Ausgangsvariablen eine Aussage. Durch die systematische Aufstellung der Regeln erhält man für jede der sechs möglichen paarweisen Permutationen jeweils 4 x 4 = 16 Regeln, daraus ergibt sich eine vollständige Regelbasis mit 96 Regeln (6 Permutationen mit jeweils 16 Regeln).

Nachfolgend wir eine initiale Regelbasis wiedergegeben, die aus sieben Regeln Rule1 bis Rule7 besteht:

Rule1

```
IF (INPUT2_Y IS VL) AND (INPUT4_W IS VL) THEN
CLASS5 = HIGH
CLASS4 = LOW
CLASS3 = LOW
CLASS2 = LOW
CLASS1 = LOW
```

Rule2

```
IF (INPUT2_Y IS VL) AND (INPUT4_W IS LOW) THEN
CLASS5 = LOW
CLASS4 = HIGH
CLASS3 = LOW
CLASS2 = LOW
CLASS1 = LOW
```

Rule3

```
IF (INPUT2_Y IS LOW) AP (INPUT4_W IS VL) THEN
CLASS5 = LOW
CLASS4 = LOW
CLASS3 = LOW
CLASS2 = LOW
CLASS1 = LOW
```

Rule4

```
IF (INPUT2_Y IS LOW) AP (INPUT4_W IS LOW) THEN
CLASS5 = LOW
CLASS4 = HIGH
CLASS3 = LOW
CLASS2 = LOW
CLASS1 = LOW
```

Rule5

```
IF (INPUT2_Y IS HIGH) AP (INPUT4_W IS VL) THEN
CLASS5 = LOW
CLASS4 = LOW
CLASS3 = LOW
CLASS2 = LOW
CLASS1 = LOW
```

Rule6

```
IF (INPUT2_Y IS HIGH) AP (INPUT4_W IS LOW) THEN
CLASS5 = LOW
CLASS4 = HIGH
CLASS3 = LOW
CLASS2 = LOW
CLASS1 = LOW
```

Rule7

```
IF (INPUT2_Y IS VH) AP (INPUT4_W IS VL) THEN
CLASS5 = LOW
CLASS4 = LOW
CLASS3 = LOW
CLASS2 = LOW
CLASS1 = LOW
```

Die Topologie des Neuro-Fuzzy-Systems 6 ergibt sich aus folgenden Überlegungen. Nach dem Entwurf des initialen Fuzzy-Klassifikationssystems wird es vollständig und verlustfrei in die Struktur eines neuronalen Netzes konvertiert, um die datengetriebene Optimierung durchzuführen. Damit wird ein neuronales Netz generiert, welches dasselbe Klassifikationssystem repräsentiert, wie das Fuzzy-System und das ein identisches Eingangs- und Ausgangsverhalten aufweist. Die Fuzzy-Neuro-Transformation ermöglicht die Übersetzung von der Repräsentation oder Darstellung des Erkennungssystems als Fuzzy-System in die Repräsentation als neuronales Netz. Dabei handelt es sich um eine korrespondenzerhaltende bidirektionale Transformation, d.h. die Topologie des neuronalen Netzes kann nach Abschluß der Lemphase wieder in die Repräsentation als Fuzzy-System überführt werden.

Zur funktionell äquivalenten Umsetzung eines Fuzzy-Modells in eine neuronale Topologie werden die einzelnen Verarbeitungsstufen - Fuzzifizierung, Regelbasis und Defuzzifizierung - auf korrespondierende Teilstrukturen eines neuronalen Netzes abgebildet. Eine wichtige Randbedingung ist hierbei die Verwendung von verfügbaren Neuro-Komponenten und die Anwendbarkeit von bewährten (zum Beispiel aus dem erwähnten Fachbuch bekannten) Lern- und Adaptionsalgorithmen. Trotz der Beschränkung auf einfache Neuronentypen ermöglicht jedoch eine spezielle Netzstruktur die vollständige Abbildung aller Operationen eines Fuzzy-Modells, welche im folgenden einzeln beschrieben werde.

Die Umsetzung der Fuzzifizierung wird durch eine erste Schicht von Neuronen mit RBF-ähnlichen Aktivierungsfunktionen (RBF = radiale Basisfunktion) realisiert. Für jede Zugehörigkeitsfunktion einer Eingangsvariablen existiert ein Neuron, an dessen Eingang jeweils nur zwei Signale aufsummiert werden: der aktuelle scharfe Eingangswert und der Mittelpunkt der Zugehörigkeitsfunktion (Figur 7). Der resultierende Wert wird anschließend über eine gaußförmige Aktivierungsfunktion gewichtet und ausgegeben. Am Ausgang eines einzelnen Fuzzifizierungs-Neurons ergibt sich ein entsprechender Grad der Zugehörigkeit $\mu_k(x_i)$ zu

$$\mu_k(x_i) \quad = \quad \exp\left[-\left(\frac{x_i - m_k}{\sigma_k}\right)^2\right]$$

wobei $x_i$ das aktuelle Eingangssignal, $m_k$ den Mittelpunkt und $\sigma_k$ die Breite der gaußförmigen Eingangszugehörigkeitsfunktion $k$ bezeichnet. Der Mittelpunktswert $m_k$ wird über ein entsprechendes Gewicht und einen konstanten Eingang "bias" für das jeweilige Neuron festgelegt. Über eine Gewichtung beider Eingänge mit $/\sigma_k$ wird die Breite der Zugehörigkeitsfunktionen eingestellt.

Ein Regelneuron (Figur 8) stellt sich wie folgt dar. Die Regelbasis des Fuzzy-Systems 10, d.h. die Ausführung seines Inferenzteils, wird durch eine Schicht von Regelneuronen realisiert, in denen alle vorhandenen Regeln simultan evaluiert werden. Die Anzahl der Neuronen entspricht der vorhandenen Regelanzahl. In der realisierten Topologie können Regeln des folgenden Typs abgebildet werden:

- einfache Regeln mit nur einer Fuzzy-Variablen in der Prämisse
- Regeln mit einem Prämissenteil, in dem mehrere Fuzzy-Variablen konjunktiv verknüpft sind (UND-Regeln)

Der Konklusionsteil kann entweder eine oder mehrere Ausgangsvariablen enthalten. Die UND-Verknüpfung zweier Fuzzy-Variablen im Prämissenteil wird im Fuzzy-Neuro-Netz durch das Produkt dieser Variablen realisiert (vgl. Figur 8). Um diese für die konjunktive Verknüpfung erforderliche multiplikative Operation mit Standardneuronen ausführen zu können, wird die Inferenz in der implementierten Topologie in zwei Stufen gebildet. Realisiert man die gaußförmige Aktivierungsfunktion nicht in einer, sondern in zwei aufeinanderfolgenden Netzschichten, so kann gleichzeitig die Berechnung des Produkts auf eine einfache Summation zurückgeführt werden. Damit ergibt sich am Ausgang der einzelnen Regelneuronen für die jeweilige Prämisse $\alpha$ der Regel $j$:

$$\alpha_j \quad = \quad \prod_{k=1}^{n_{mbf}} \mu_k(x_i) \quad = \quad \prod_{k=1}^{n_{mbf}} \exp\left[-\left(\frac{x_i - m_k}{\sigma_k}\right)^2\right] \quad = \quad \exp\left[\sum_{k=1}^{n_{mbf}}\left(\frac{x_i}{\sigma_k} - \frac{m_k}{\sigma_k}\right)^2\right]$$

Die Berechnung der Gaußfunktion, die für die Ermittlung der Zugehörigkeiten notwendig ist, wird nicht in der Fuzzifizierungsschicht allein, sondern in Kombination mit der darauffolgenden Regelschicht ausgeführt. In den Neuronen der ersten Schicht wird eine quadratische Aktivierungsfunktion, $f(x) = x^2$ und in den Regelneuronen eine exponentielle Aktivierungsfunktion verwendet, $f(x) = \exp(x)$. Folglich stehen die Werte für den Grad der Zugehörigkeit $\mu_i$ nicht explizit nach der Fuzzifizierungsschicht zur Verfügung, sondern gehen unmittelbar in die Berechnung der Konklusionen $\alpha_j$ ein. Der Vorteil dieser Anordnung liegt zum einen in der Vermeidung eines "Produkt-Neurons", für das ein entsprechender Adaptionsalgorithmus zusätzlich definiert werden müßte, zum anderen in der Erhaltung der für die Korrespondenz zum Fuzzy-System notwendigen Netzstruktur.

Durch die multiplikative Verknüpfung der Teilprämissen, ausgeführt in den ersten beiden verborgenen Schichten, wird die Prämisse der Regel verarbeitet. Der sich am Ausgang des Regelneurons ergebende numerische Wert $\alpha_j$ repräsentiert die Auswertung des WENN-Teils einer Regel. Dieser Wert wird anschließend einem weiteren Neuron zugeführt, das die Fuzzy-Variable des Ausgangssignals wiedergibt. Damit wird der Konklusionsteil der Regel abgebildet. Hier entspricht die Anzahl der Neuronen der Gesamtzahl aller Ausgangszugehörigkeitsfunktionen. Diese Neuronen führen eine einfache Summation aller Konklusionen der Regeln durch, die für eine bestimmte Fuzzy-Ausgangsvariable "zünden", d.h. wirksam werden. Als Aktivierungsfunktion wird deshalb hier die Identität $f(x) = x$ benutzt.

Die Deffuzifizierung in dem Fuzzy-System 10 Für die Berechnung der Ausgangswerte des Fuzzy-Systems wird eine Standard-Defuzzifizierungsmethode mit Maxdot-Inferenz und anschließender Schwerpunktsberechnung über die Summe aller zündenden Ausgangszugehörigkeitsfunktionen verwendet. Aus den verschiedenen Konklusionen $\alpha_j$ ergibt sich somit für einen Ausgangswert $y$

$$y \;=\; \frac{\displaystyle\sum_{k=1}^{n_{ombf}} M_k \cdot \sum_{j=1}^{n_r}\left(w_{kj}\cdot\alpha_j\right)}{\displaystyle\sum_{k=1}^{n_{ombf}} A_k \cdot \sum_{j=1}^{n_r}\left(w_{kj}\cdot\alpha_j\right)} \qquad \text{mit}\;\begin{cases} w_{kj} = 1 \text{ wenn Teilkonklusion in Regel}\\[2mm] w_{kj} = 0 \text{ sonst,}\end{cases}$$

wobei mit $M_k$ die einzelnen Momente und mit $A_k$ die Flächen der jeweiligen Ausgangszugehörigkeitsfunktionen bezeichnet sind. Eine Defuzzifizierung nach der Flächenschwerpunktsmethode (auch: *Center of Sums*) gestattet die Vorausberechnung der Flächen und Momente schon bei der Vorstrukturierung des Netzes und die einfache Repräsentation durch zwei numerische Werte während der Adaptionsphase. Es muß keine explizite Auswertung der sich jeweils ergebenden Flächen der Ausgangszugehörigkeitsfunktionen vorgenommen werden. In der Topologie sind $M_k$ und $A_k$ durch entsprechende Gewichtsfaktoren realisiert. So erfolgt eine Skalierung der Einzelmomente und - flächen mit dem $\alpha$-Wert, der aus der Überlagerung aller zündenden Regeln resultiert. Anschließend wird der Quotient aus der Summe aller Momente und der Summe aller Flächen berechnet. Da die Division nicht in einem einzigen Neuron realisiert werden kann, wird durch eine Logarithmierung und anschließende Exponentierung die Berechnung auf eine Subtraktion zurückgeführt:

$$y \;=\; \exp\left[\; \ln\!\left(\sum_{k=1}^{n_{ombf}} M_k \cdot \sum_{j=1}^{n_r}\left(w_{kj}\cdot\alpha_j\right)\right) \;-\; \ln\!\left(\sum_{k=1}^{n_{ombf}} A_k \cdot \sum_{j=1}^{n_r}\left(w_{kj}\cdot\alpha_j\right)\right)\right] \qquad (1)$$

Damit ist die Berechnung des scharfen Ausgangswertes aus der Zusammenfassung der Fuzzy-Variablen umgesetzt.

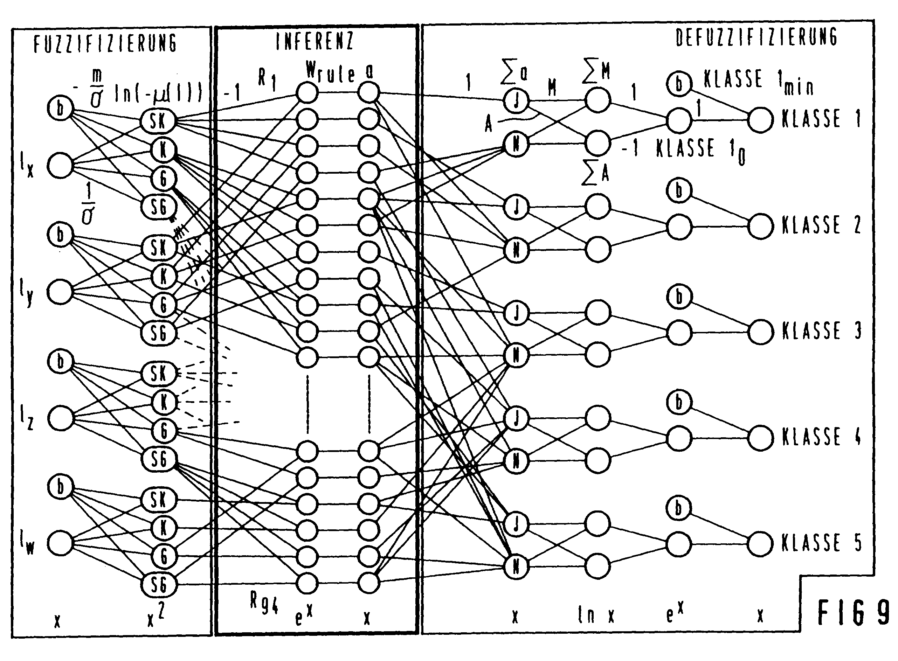

Ein schematischer Überblick über die vollständige realisierte neuronale Topologie für das Neuro-Fuzzy-System 6 ist aus Figur 9 ersichtlich. Die dargestellte Struktur basiert auf dem Fuzzy-Klassifikationsystem mit den vier Eingangsvariablen $x$, $y$, $z$ und $w$, den fünf Ausgangsvariablen Klasse 1 - Klasse 5 und einer Regelbasis mit 96 Regeln. Zu erkennen sind die drei wesentlichen Teilstrukturen für die Fuzzifizierung, die Regelbasis und die Defuzzifizierung. Das Modell entspricht einem vorwärtsgetriebenen neuronalen Netz mit acht Schichten, wobei allein drei Schichten für die funktionell äquivalente Umsetzung der Defuzzifizierungsoperation verantwortlich sind. In der untersten Zeile von Figur 9 sind die in den einzelnen Schichten durchgeführten Operationen angedeutet.

Die Neuro-Fuzzy-Architektur repräsentiert eine vollständige Abbildung des zugrunde liegenden Fuzzy-Modells. Die vier Eingangssignale $I_X$, $I_Y$, $I_Z$ und $I_W$ werden in der zweiten und dritten Schicht fuzzifiziert. Dabei erfolgt die Festlegung der Anzahl, der Form und Lage der Eingangszugehörigkeitsfunktionen und die Zuordnung zu den entsprechenden Variablen in den Neuronen der zweiten Schicht. In diesem Fall werden die Eingänge jeweils mit den vier Zugehörigkeitsfunktionen *SK, K, G, SG* (sehr klein, klein, groß, sehr groß) fuzzifiziert, wobei sich eine Schicht mit sechzehn Neuronen ergibt. Anschließend werden in der dritten Schicht die einzelnen Regeln $R_1$ bis $R_{96}$ der Regelbasis umgesetzt. Für jede Regel existiert nun ein entsprechendes Regelneuron, an dessen Eingang die passenden Teilprämissen anliegen. Diese Teilprämissen werden miteinander wie beschrieben verknüpft, und es wird ein Regelaktivierungsgrad $\alpha$ berechnet, der zusätzlich mit einem Regelgewicht $w_{Rule}$ multipliziert wird. Dieser Regelaktivierungsgrad $\alpha$ wird anschließend über die Teilkonklusionen den Zugehörigkeitsfunktionen der einzelnen Ausgangsvariablen Klasse 1 - Klasse 5 zugeordnet. Die sich dadurch in Schicht 5 ergebenden Teilkonklusionen für eine Ausgangsgröße werden nachfolgend im Defuzzifizierungsteil zusammengefaßt. Zwischen den Schichten 5 und 6 erfolgt eine Gewichtung der Konklusionen mit den zu einer Ausgangszugehörigkeitsfunktion gehörenden vorausberechneten Flächen $A_k$ und Momenten $M_k$. In den Schichten 6 und 7 wird schließlich die Berechnung des Quotienten von Momenten und Flächen über die Logarithmierung und Subtraktion der Argumente durchgeführt.

In der nachfolgenden Tabelle 2 sind für ein Ausführungsbeispiel die wichtigsten Parameter verschiedener Fuzzy-Systeme für die Fahrsituationserkennung und die entsprechenden Klassifikationsergebnisse angegeben. Aufgeführt sind die Resultate für eine repräsentative Meßfahrt, die etwa zu gleichen Anteilen die fünf verschiedenen Fahrsituationsklassen enthält. Ausgewertet wurden Sensordaten für eine Fahrzeit von 32 min; bei einer Abtastrate von 40 ms entspricht dies 48000 Abtastwerten.

| System | Gelernte Parameter | | | | # Regeln | # EZ | $J$ | R/F/N | R/F/N % |
|---|---|---|---|---|---|---|---|---|---|
| | EZ | AZ | RG | K | | | | | |
| initial | - | - | - | - | 96 | 16 | 0.058 | 106/11/75 | 55/6/39 |
| man. opt. | - | - | - | - | 96 | 16 | 0.057 | 142/11/39 | 74/6/20 |
| lrn_mbf | + | - | - | - | 96 | 16 | 0.033 | 159/9/24 | 82/5/13 |
| lrn_rw_mbf | + | - | + | - | 44 | 16 | 0.016 | 179/6/7 | 93/3/4 |
| lrn_all | + | - | + | + | 85 | 16 | 0.013 | 181/4/7 | 94/2/4 |
| rule_red | + | - | + | - | 20 | 13 | 0.021 | 179/12/1 | 93/6/1 |

*Tabelle 2*

Durch die Bildung von Zeitfenstern mit einer Fensterlänge von $L$ = 250 Abtastwerten ergeben sich für die Fahrtdauer insgesamt 192 Klassifikationsausgaben (48000/250, eine Klassifikationsausgabe alle 10 sec.). Von links nach rechts finden sich folgende Angaben in der Tabelle: Die Bezeichnung des jeweiligen Klassifikationssystems, Angaben darüber, welche Parameter des Fuzzy-Systems im neuronalen Netz trainiert wurden (EZ = Eingangszugehörigkeitsfunktionen, AZ = Ausgangszugehörigkeitsfunktionen, RG = Regelgewichte, K = Konklusionen), die Größe der Fuzzy-Regelbasis, die Anzahl der Eingangszugehörigkeitsfunktionen, der mittlere quadratische Fehler zum Zieldatensatz und das Klassifikationsergebnis als Absolutwert und prozentual (R/F/N - Richtig/Falsch/Nicht klassifiziert).

Das initiale Fuzzy-System, das allein mit Expertenwissen aufgestellt wurde, klassifiziert die momentane Fahrsituation korrekt in 106 von 192 Fällen (55 %), falsch in 11 (6 %) und macht keine Aussage in 75 Fällen (39 %). Das manuell optimierte System erreicht bezüglich der richtig klassifizierten Situationen einen Anteil von 74 %. Für die trainierten Erkennungssysteme ergeben sich unterschiedliche Resultate, abhängig von den im neuronalen Netz freigegebenen Parametern. Dabei wurden die verfügbaren Beispieldaten jeweils aufgeteilt in Trainingsmenge und Generalisierungsmenge im Verhältnis 7:3. Die Ergebnisse zeigen, daß sich, bei reduziertem Entwicklungsaufwand, durch die datengetriebene Optimierung eine erhebliche Steigerung der Erkennungsrate erreichen läßt. So wird z.B. mit einer reduzierten Regelbasis von 85 Regeln ein Klassifikationsergebnis von 94 % "richtig", 2 % "falsch" und 4 % "nicht klassifiziert" erreicht.

**Patentansprüche**

1.  Schaltungsanordnung (1) zum Steuern eines Fahrwerks- oder Antriebssystems in einem Kraftfahrzeug (2), mit einem Fuzzy-System (10),

    -   in dem Sensorsignale ausgewertet und Stellsignale für das Fahrwerks- oder Antriebssystem erzeugt werden, wobei die Sensorsignale und/oder Stellsignale vor der Auswertung in dem Fuzzy-System (10) in einem Signalspeicher (8) gespeichert, und wobei eine Erkennung der Fahrsituation durchgeführt wird,
    -   das mit einem neuronalen Netz (12) verbunden ist, in dem die Sensorsignale und Referenzdaten aus einer Aufzeichnung von Fahrdaten des Kraftfahrzeugs (2) ausgewertet werden und durch welches das Fuzzy-System generiert und optimiert wird, und
    -   durch das während des Fahrbetriebs die jeweilige Fahrsituation klassifizierende Signale erzeugt werden, die

## EP 0 870 132 B1

zu einer fahrsituationsabhängigen Steuerung des Fahrwerks- oder Antriebssystems verwendet werden,

**dadurch gekennzeichnet,**

- daß die Sensorsignale und/oder Stellsignale vor der Auswertung in dem Fuzzy-System (10) in einer Vorverarbeitungsschaltung (9) gefiltert und geglättet werden, und
- daß durch Verknüpfung eine Dimensionsreduktion der Sensorsignale durchgeführt wird.

2. Schaltungsanordnung nach Anspruch 1, dadurch gekennzeichnet, daß sie eine Datenbank (13 ) mit Videoaufzeichnungen von Meßfahrten aufweist und daß die darin enthaltenen Daten über einen Referenzdatenspeicher (14) dem neuronalen Netz (12) zugeführt werden.

3. Schaltungsanordnung nach Anspruch 1, dadurch gekennzeichnet, daß durch das neuronale Netz (12) die Form und die Lage der Zugehörigkeitsfunktionen von Ein- und Ausgangsdaten sowie die Regelbasis des Fuzzy-Systems (10) adaptiert werden.

4. Schaltungsanordnung nach Anspruch 1, dadurch gekennzeichnet, daß das Eingangs- und das Ausgangsverhalten des Fuzzy-Systems (10) und des neuronalen Netzes (12) funktionell äquivalent sind.

5. Schaltungsanordnung nach Anspruch 1, dadurch gekennzeichnet, daß das Fuzzy-System (10) und das neuronale Netz (12) je ein Klassifikationssystem enthalten, die durch eine korrespondenzerhaltende bidirektionale Transformation ineinander überführbar sind.

## Claims

1. Circuit arrangement (1) for controlling a chassis or drive system in a motor vehicle (2), comprising a fuzzy system (10)

- in which sensor signals are evaluated and actuating signals for the chassis or drive system are generated, the sensor and/or actuating signals being stored in a signal memory (8) prior to evaluation in the fuzzy system (10), and in which identification of the driving situation is performed,

- which is interconnected with a neural network (12) wherein the sensor signals and reference data obtained from a recording of the driving data of the motor vehicle (2) are evaluated, the fuzzy system being generated and optimised by said neural network, and

- by which signals classifying the respective driving situation are generated during driving and are used for driving-situation dependent control of the chassis or drive system,

**characterised in that**

- the sensor signals and/or actuation signals are filtered and smoothed in a preprocessing circuit (9) prior to being evaluated in the fuzzy system (10), and

- a dimensional reduction of the sensor signals is performed by means of logic operations.

2. Circuit arrangement in accordance with Claim 1, characterised in that the circuit arrangement comprises a database (13) containing video recordings of measurement drives, and that the data contained in said database is fed via a reference data memory (14) to the neural network (12).

3. Circuit arrangement in accordance with Claim 1, characterised in that the shape and position of the membership functions of the input and output data as well as the rule base of the fuzzy system (10) are adapted by means of the neural network (12).

4. Circuit arrangement in accordance with Claim 1, characterised in that the input and the output behaviour of the fuzzy system (10) and the neural network (12) are functionally equivalent.

**5.** Circuit arrangement in accordance with Claim 1, characterised in that the fuzzy system (10) and the neural network (12) each contain a classification system which can be transferred from one to the other by means of a correspondence-preserving bidirectional transformation.


**Revendications**

**1.** Circuit (1) pour la commande d'un système de suspension ou de propulsion dans un véhicule à moteur (2), avec un système flou (10),

- dans lequel des signaux de capteurs sont exploités et des signaux de réglage sont produits pour le système de suspension ou de propulsion, les signaux de capteurs et/ou les signaux de réglage étant mis en mémoire dans une mémoire de signaux (8) avant l'exploitation dans le système flou (10) et une reconnaissance de la situation de marche étant effectuée,
- qui est relié à un réseau neuronal (12), dans lequel les signaux de capteurs et les données de référence provenant d'un enregistrement de données de marche du véhicule à moteur (2) sont exploités et par lequel le système flou est généré et optimisé, et
- par lequel, pendant l'exploitation en marche, sont produits les signaux classifiant la situation de marche respective qui sont utilisés pour la commande en fonction de la situation de marche du système de suspension ou de propulsion,

caractérisé en ce que,

- les signaux de capteurs et/ou les signaux de réglage sont filtrés et lissés avant l'exploitation dans le système flou (10), dans un montage de prétraitement (9) et
- en ce qu'une réduction de dimension des signaux de capteurs est effectuée par combinaison.

**2.** Circuit selon la revendication 1 caractérisé en ce qu'il présente une banque de données (13) avec enregistrements vidéo de marches de mesure et en ce que les données qui y sont contenues sont amenées par une mémoire de données de référence (14) au réseau neuronal (12).

**3.** Circuit selon la revendication 1, caractérisé en ce que la forme et la position des fonctions d'appartenance de données d'entrée et de sortie ainsi que la base de règles du système flou (10) sont adaptées par le réseau neuronal (12).

**4.** Circuit selon la revendication 1, caractérisé en ce que les comportements d'entrée et de sortie du système flou (10) et du réseau neuronal (12) sont fonctionnellement équivalents.

**5.** Dispositif de montage selon la revendication 1, caractérisé en ce que le système flou (10) et le réseau neuronal (12) contiennent chacun un système de classification qui peut être transmis l'un dans l'autre par une transformation bi-directionnelle conservant les correspondances.

FIG 1

Integriertes Neuro-Fuzzy System

Klassifikation der Fahrsituation

Fuzzy-System

IF-THEN

Neuronales Netz

Sensordaten (direkt/indirekt)

Vorverarbeitung

Signalspeicher

Videoaufzeichnung

Referenzdaten

A

B

1, 2, 3, 4, 5, 6, 8, 9, 10, 12, 13, 14, 16, 17, 18, 19, e

x, y, z, t

+ −

FIG 2

FIG 3

w(t-3) w(t-2) w(t-1) w(t)

$t_0 - 25L$     $t_0 - L$     $t_0$     t

$\mu(y)$

VL     L     H     VH

1

$\sigma_4$

$m_1$     $m_2$     $m_3$     $m_4$     y

FIG 4

$\mu(Kl.3)$

L     H

1

FIG 5

0     1     Kl.3

FIG 6

KLASSE 5

$w_R = 180\%$

FIG 7

FIG 8

FUZZIFIZIERUNG INFERENZ DEFUZZIFIZIERUNG

$-\dfrac{m}{\sigma}$ $\ln(-\mu(l))$ $-1$ $R_1$ $W_{rule}$ $a$ $1$ $\sum a$ $\sum M$ $1$ KLASSE $1_{min}$

$b$ SK J M KLASSE 1

$l_x$ K A N $-1$ KLASSE $1_0$

$\dfrac{1}{\sigma}$ G $\sum A$

SG

$b$ SK KLASSE 2

$l_y$ K J

G N

SG

$b$ SK KLASSE 3

$l_z$ K J

G N

SG

$b$ SK KLASSE 4

$l_w$ K J

G N

SG KLASSE 5

$R_{g4}$ J

N

$x$ $x^2$ $e^x$ $x$ $x$ $\ln x$ $e^x$ $x$

FIG 9